# EUROPEAN PATENT APPLICATION

(11) **EP 4 796 460 A1**
(43) Date of publication of application: **26.08.2026**
(21) Application number: 25159867.8
(22) Date of filing: 25.02.2025
(51) Int. Cl.: B65G 1/02, B65D 88/12, B65D 88/58, B65D 90/00, B65G 1/04

(54) **MOBILE STORAGE SYSTEM**

(71) Applicant: AutoStore Technology AS, 5578 Nedre Vats (NO)
(72) Inventor: IVARJORD, Åsmund, 5578 Nedre Vats (NO)
(74) Representative: Kilburn & Strode LLP

(57) **Abstract**

The disclosure relates to a mobile storage system comprising a mobile container and an automated storage and retrieval system "AS/RS" arranged inside the mobile container. The mobile container comprises a plurality of panels, wherein the plurality of panels comprises a displaceable panel configured to slide between a first position and a second position, wherein the AS/RS is accessible from outside the mobile container when the displaceable panel is in the second position.

## Description

### TECHNICAL FIELD

The disclosure relates to a mobile storage system. More particularly, it relates to a mobile storage system comprising a mobile container and an automated storage and retrieval system in the mobile container.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in storage bins that are configured to be stacked, side by side, within a three-dimensional grid. A rail system is arranged on top of the grid, along which robotic bin-handling vehicles configured to lift bins from the grid can travel. The bin-handling vehicles are configured to transport bins from the grid and to deliver them to ports or stations at the periphery of the grid so that the goods within the bin can be picked and packed.

Pop-up shops or stores are temporary retail outlets. Planning inventory, transport, setup and display of inventory are significant challenges for pop-ups. Typically pop-ups are set up using conventional storage and transport means such as trucks and cardboard boxes. There is therefore a need for more efficient ways of transporting, setting up and restocking pop-ups.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic bin-handling vehicles configured to retrieve and/or rearrange goods stored within the grid;
Fig. 2 shows a top view of the system of Fig. 1;
Fig. 3A shows a side view of a first robotic bin-handling vehicle suitable for use in the system of Fig. 1;
Fig. 3B shows a side view of a second robotic bin-handling vehicle suitable for use in the system of Fig. 1;
Fig. 3C is a perspective side view of the robot of Fig. 3B;
Fig. 4 shows a computing device for implementing the operations described herein;
Figs. 5A and 5B show perspective side views of a mobile storage system comprising a mobile container and an automated storage and retrieval system arranged inside the mobile container;
Fig. 6 is a perspective side view of a mobile storage system comprising a mobile container with a shutter curtain;
Fig. 7 is a perspective side view of a mobile storage system comprising a mobile container with an overhanging displaceable panel;
Figs. 8A and 8B show perspective views of an automated storage and retrieval system comprising first and second automated storage and retrieval sub-systems; and
Fig. 9 is a flow diagram for a method of using an automated storage and retrieval system.

### DETAILED DESCRIPTION

In overview, the disclosure relates to a mobile storage system comprising a mobile container and an automated storage and retrieval system arranged inside the mobile container. The mobile container has a displaceable panel that, when open, provides access to the automated storage and retrieval system. The mobile storage system provides a short-term storage solution for events and pop-ups and can dock with an immobile storage system for restocking.

### Automated storage and retrieval system overview

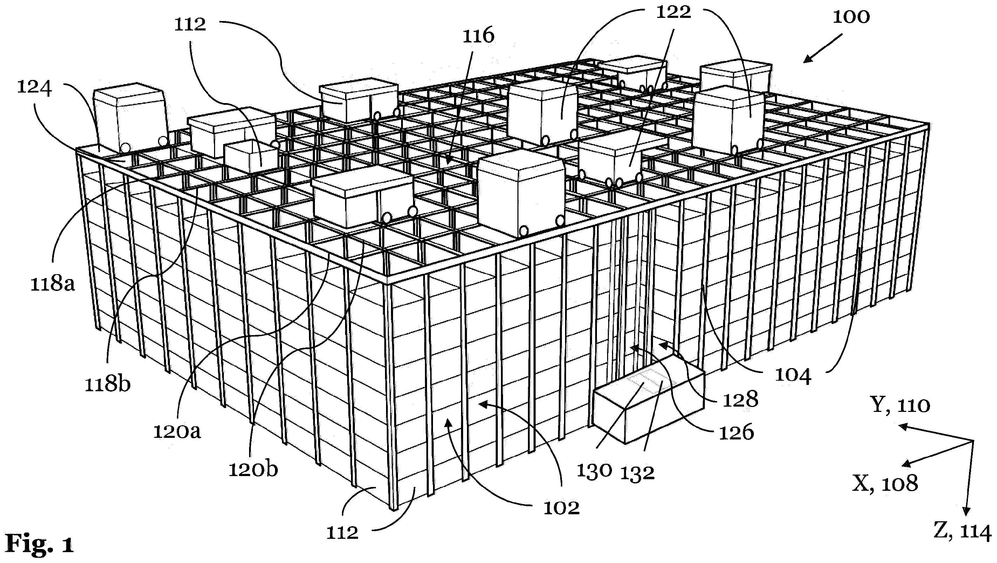

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic bin-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a pick-up port or ports 130, 132. The pick-up ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

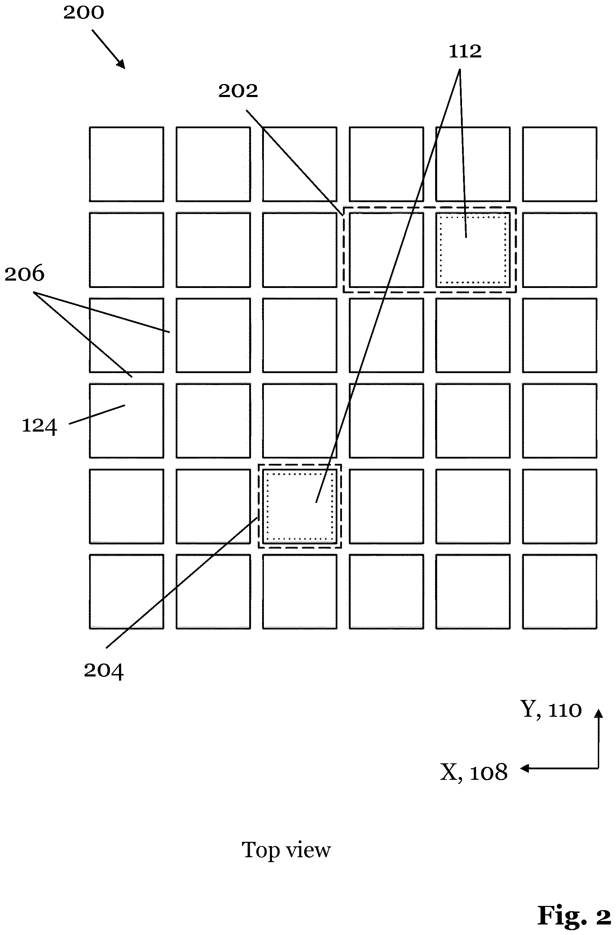

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

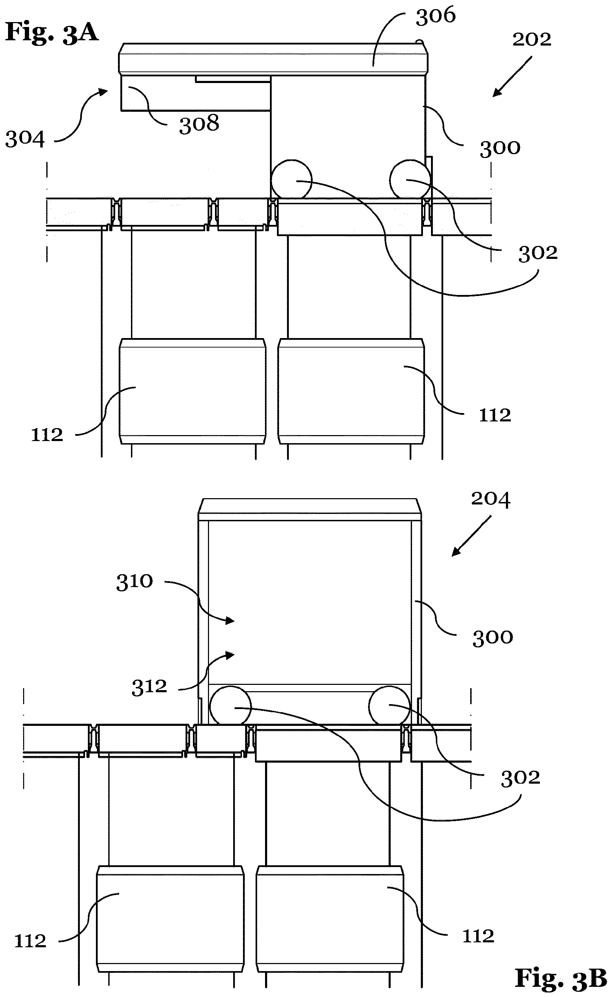

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

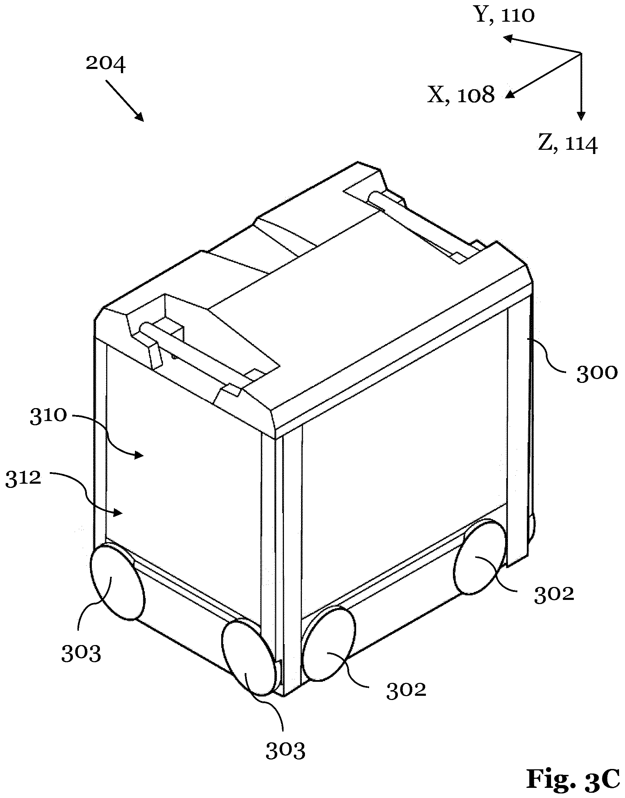

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

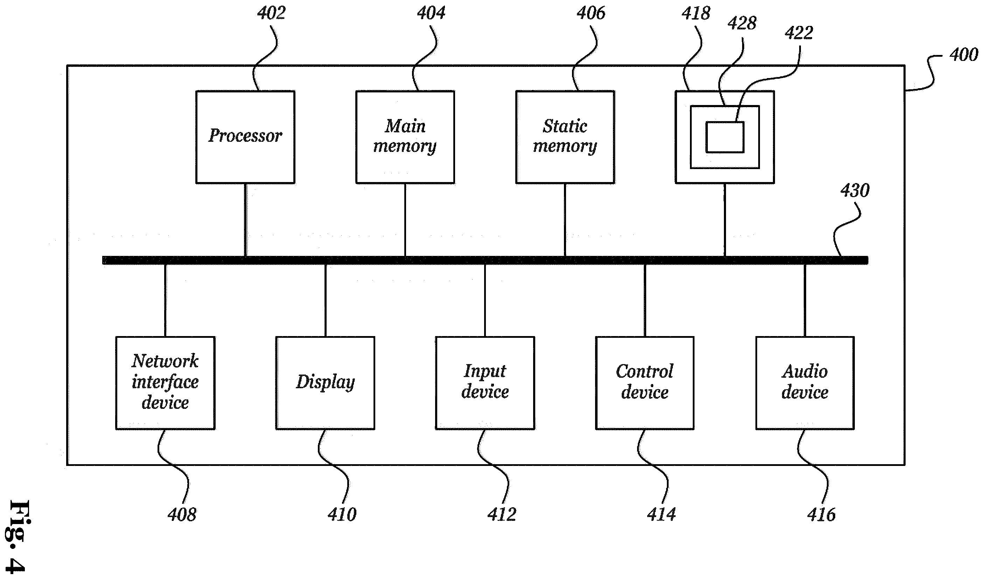

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the pick-up port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

The specific improvements of the present disclosure will now be described in general terms before implementations of the disclosure are described by way of example with reference to the drawings. The word "may" is used to refer to a feature that is optional, i.e. in some implementations of the disclosure, the feature is present, and in some implementations of the disclosure, the feature is not present.

In a first aspect of the present disclosure, a mobile storage system comprises a mobile container and an automated storage and retrieval system "AS/RS" arranged inside the mobile container. The mobile container comprises a plurality of panels, wherein the plurality of panels comprises a displaceable panel. The displaceable panel may be configured to slide or rotate between a first position and a second position, or may be configured to be removeable between a first position and a second position. The AS/RS is accessible from outside the mobile container when the displaceable panel is in the second position. The AS/RS may not be accessible from outside the mobile container when the displaceable panel is in the first position, or may only be partially accessible when the displaceable panel is in the first position. The mobile storage system provides a short-term storage solution for events and pop-ups. It is agile and adaptable. When paired with a second storage system, such as an immobile storage system as discussed in detail below, it allows rapid planning of pop-ups or pickup-points, as well as rapid packing, preparation and access to the storage system.

The mobile container may be a shipping or intermodal container. As is known to the skilled person, intermodal containers can bundle cargo and goods into larger, unitized loads, that can be easily handled, moved, and stacked, and that will pack tightly in a ship or yard. Intermodal containers share a number of construction features to withstand the stresses of shipping, to facilitate their handling and to allow stacking. They may be identifiable through individual unique ISO 6346 reporting marks. The container may be a standard 20 foot (approximately 6.1 m) shipping container, although other sizes can be used.

The AS/RS may be the same as, or similar to, the AS/RS disclosed above and shown in Figs. 1 and 2, for example, adapted to fit in the mobile container. It may have a storage grid defined by one or more vertical columns defining a plurality of cells. The automated storage and retrieval system may further comprise a robotic vehicle, such as shown in Fig. 3A, Fig. 3B or Fig. 3C, arranged to traverse the storage grid and move a storage bin in and out of the storage grid. It may comprise a plurality of storage bins. The grid may comprise pairs of vehicle rails or tracks, respectively extending in the X and Y directions. The robotic vehicle, which can be of a range of size, shape and function, may be provided and configured to run on the rails and to transport the bins in both the X and Y directions. The robot may be additionally configured to lift and lower bins from/into the columns in the Z direction, the bins optionally being guided by vertical frame members. The robot may access the bins via access openings above the columns and formed between the rails.

The AS/RS may comprise a control system, such as the processing system shown in Fig. 4, for controlling the various components of the mobile storage system. It may comprise an access port configured to allow storage bins and/or items stored in the grid to be removed e.g. manually. It may comprise a transfer port configured to allow storage bins to be removed and reintroduced (horizontally) into an associated port column to and from an adjacent AS/RS. As such, a transfer port can comprise a conveyor onto which a storage bin may be lowered and transported horizontally out of the port column. The port columns include an opening or access point through which storage bins can enter and leave the column. The container may also have space for other equipment such as tables, cabinets, clothing racks and shelving units. This improves its functionality as a pop-up store, for example.

The plurality of panels may comprise a base panel; a top panel; and four vertically extending side panels extending from each side of the base panel to connect the base panel and the top panel. One of the base panel, top panel and four vertically extending side panels may be the displaceable panel. The displaceable panel may be one of the four vertically extending side panels. The displaceable panel may be the top panel. A top panel or side panel may form an overhang in the second position. The overhang may be used to provide shelter or as part of a display for a pop-up.

A frame of the mobile container may comprise guide tracks for guiding sliding of the displaceable panel. The displaceable panel may be a shutter curtain comprising a plurality of interlocking shutter slats. The plurality of interlocking shutter slats may comprise an end slat, wherein the end slat comprises a locking mechanism for preventing sliding of the shutter curtain when in a locked configuration. A plane of the shutter curtain may be parallel to a plane of another panel of the plurality of panels in the second position. That is to say that it may wrap around a side or bottom of the mobile container. Accordingly, the mobile container may comprise support means on the base panel configured to position the mobile container above the floor creating a space to accommodate the shutter curtain, such that the plane of the shutter curtain is underneath and parallel to a plane of the base panel in the second position.

The mobile container may further comprise a roller tube, wherein the shutter curtain is configured to wrap around the roller tube when the shutter curtain is in the second position. The roller tube may be positioned on a side panel. The roller tube may be positioned at a height such that the shutter curtain does not extend beyond the height of the side panel when the displaceable panel is in the second position. The mobile container may comprise a storage area and the roller tube may be positioned on a side panel within the storage area. This prevents any interference with the AS/RS.

The mobile storage system may further comprises a pulley, belt drive and/or motor configured to slide the displaceable panel between the first and second positions. The AS/RS may comprise a grid with a transfer port on a side of the grid, wherein the transfer port is configured to transfer a storage bin between the AS/RS and another adjacent AS/RS. The transfer port may comprise a conveyor belt or motorised wheels for this purpose.

In a second aspect of the present disclosure, an AS/RS comprises a first automated storage and retrieval sub-system in communication with a second automated storage and retrieval sub-system. The first automated storage and retrieval sub-system comprises a storage grid defined by one or more vertical columns defining a plurality of cells, such as the one disclosed above and shown in Figs. 1 and 2. The second automated storage and retrieval sub-system is a mobile storage system according to the first aspect disclosed above.

The automated storage and retrieval system may further comprise a first robotic vehicle, such as shown in Fig. 3A, Fig. 3B or Fig. 3C, arranged to traverse the first automated storage and retrieval sub-system and move a storage bin in and out of the storage grid of the first automated storage and retrieval sub-system. The automated storage and retrieval system may further comprise a second robotic vehicle, such as shown in Fig. 3A, Fig. 3B or Fig. 3C, arranged to traverse the second automated storage and retrieval sub-system and move a storage bin in and out of a storage grid of the second automated storage and retrieval sub-system. The first and/or second robot may be configured to transfer a storage bin between the first and second sub-systems. The automated storage and retrieval system may comprise a plurality of storage bins that can be transferred between and stored in the first and second sub-systems. The first and/or second robot may be able to traverse both the first and second sub-systems.

The first sub-system may comprise a first transfer port in the side of its grid configured to transfer storage bins between the sub-systems. The second sub-system may comprise a second transfer port in the side of its grid configured to transfer storage bins between the sub-systems. The first and second transfer ports may be aligned with each other. Each sub-system may have multiple transfer ports, which may be dedicated to either receiving a storage bin or transferring out a storage bin.

Alternatively, the top of the grid of the first sub-system may align with and be level with the top of the grid of the second sub-system such that a robot can cross from one grid to the other and transfer storage bins in this way. The rail system of one or both grids may be adapted to mate with the other rail system to allow bin handling robots to move between storage systems using the joined rail systems. Optionally, if there is a gap between adjacent rail systems of the respective grids, intermediate elements can be connected to one or both rail systems allowing bin handling robots to move between storage systems using the intermediate elements.

Alternatively, the grid of the first sub-system may be positioned above and aligned with the grid of the second sub-system. As such, a robot on the grid of the first sub-system is able to retrieve a storage bin in the grid of the second sub-system by reaching through the bottom of the grid of the first sub-system to the grid of the second sub-system. Means for aligning the sub-systems include predefined markers for placing the second sub-system in a pre-defined position in which the sub-systems are aligned.

Each sub-system may comprise a control system, such as the processing system shown in Fig. 4, for controlling the various components of the respective sub-system. The two control systems may be configured to communicate with each other, for example to coordinate operation of the two sub-systems. Alternatively, only one of the first or second sub-systems may have a control system which is able to conduct storage operations (e.g. control of robots) across both sub-systems.

In a third aspect of the present disclosure, a method of using the AS/RS of the second aspect of the present disclosure comprises transferring a storage bin between the first and second automated storage and retrieval sub-systems. The method may further comprise sliding, rotating or moving the displaceable panel of the second automated storage and retrieval sub-system from the first position to the second position. The method may further comprise positioning the second automated storage and retrieval sub-system adjacent to the first automated storage and retrieval sub-system. For example, the method may comprise positioning the second automated storage and retrieval sub-system laterally adjacent and/or vertically adjacent to (i.e. underneath) the first automated storage and retrieval sub-system. The method may further comprise transferring a first storage bin from the second sub-system to the first sub-system and transferring a second storage bin from the first sub-system to the second sub-system, wherein the second storage bin comprises more items than the first storage bin. For example, the method may comprise laterally transferring or vertically transferring a first storage bin from the second sub-system to the first sub-system and laterally transferring or vertically transferring a second storage bin from the first sub-system to the second sub-system. The method may further comprise sliding, rotating or moving the displaceable panel of the second automated storage and retrieval sub-system from the second position to the first position. This may be known as a restocking operation. Similarly, the first storage bin can be transferred to the first sub-system, have an item added to it, and then it can be returned to the second sub-system.

In a fourth aspect of the present disclosure, a computer readable medium comprises instructions which, when executed by a processor, cause an AS/RS to perform any of the methods of the third aspect.

In a fifth aspect of the present disclosure, an AS/RS comprises a first automated storage and retrieval sub-system in communication with a second automated storage and retrieval sub-system. This means, for example, that the first automated storage and retrieval sub-system is able to transfer a storage bin to and from the second automated storage and retrieval sub-system and/or vice versa. Each sub-system may comprise a control system, such as the processing system disclosed above and shown in Fig. 4, for controlling the various components of the respective sub-system. The two control systems may be configured to communicate with each other, for example to coordinate operation of the two sub-systems. Alternatively, only one of the first or second sub-systems may have a control system which is able to conduct storage operations (e.g. control of robots) across both sub-systems.

The first automated storage and retrieval sub-system comprises a storage grid defined by one or more vertical columns defining a plurality of cells. The second automated storage and retrieval sub-system is arranged inside a mobile container. The container comprises a plurality of panels comprising a displaceable panel configured to move, e.g. slide or rotate, between a first position and a second position. The AS/RS comprises a robot configured to transfer a storage bin between the first automated storage and retrieval sub-system and the second automated storage and retrieval sub-system when the displaceable panel is in the second position.

The plurality of panels may comprise a base panel, a top panel and four vertically extending side panels extending from each side of the base panel to connect the base panel and the top panel, wherein one of the base panel, top panel and four vertically extending side panels is the displaceable panel. A frame of the mobile container may comprise guide tracks for guiding sliding of the displaceable panel. The displaceable panel may be one of the four vertically extending side panels. The displaceable panel may be the top panel. The top panel may form an overhang in the second position.

The displaceable panel may be a shutter curtain comprising a plurality of interlocking shutter slats. A plane of the shutter curtain may be parallel to a plane of another panel of the plurality of panels in the second position. The mobile container may comprise support means on the base panel configured to position the mobile container above the floor, wherein the plane of the shutter curtain is underneath and parallel to a plane of the base panel in the second position. The mobile container may further comprise a roller tube wherein the shutter curtain is configured to wrap around the roller tube when the shutter curtain is in the second position. The mobile storage system may comprise a pulley, belt drive and/or motor for sliding or rotating the displaceable panel between the first and second positions.

The first automated storage and retrieval sub-system may comprise a transfer port on a side of the grid, wherein the transfer port is configured to transfer a storage bin between the first automated storage and retrieval sub-system and the second automated storage and retrieval sub-system. The transfer port may comprise a conveyor belt. The second automated storage and retrieval sub-system may comprise a transfer port on a side of a grid defined by one or more vertical columns defining a plurality of cells, wherein the transfer port is configured to transfer a storage bin between the second automated storage and retrieval sub-system and the first automated storage and retrieval sub-system. The transfer port may comprise a conveyor belt. In these configurations where one or both sub-systems have a transfer port, the sub-systems may be positioned laterally adjacent to each other, enabling lateral transfer of storage bins between the sub-systems.

The robot may be configured to move across a top level of the grid of the first automated storage and retrieval sub-system.

The first automated storage and retrieval sub-system may be arranged above the second automated storage and retrieval sub-system. The robot may comprise a lifting device comprising a gripping device, wherein the robot is configured to pass the gripping device through the grid of the first automated storage and retrieval sub-system when transferring the storage bin between the first automated storage and retrieval sub-system and the second automated storage and retrieval sub-system when the displaceable panel is in the second position. A grid column of the first sub-system may be open at the bottom to provide access to the grid of the second sub-system. Thus, in this configuration, vertical transfer of storage bins between the sub-systems is possible.

The first automated storage and retrieval sub-system may be immobile.

In a sixth aspect of the present disclosure, a method of using the system according to the fifth aspect comprises transferring a storage bin between the first and second automated storage and retrieval sub-systems.

In a seventh aspect of the present disclosure, a computer readable medium comprising instructions which, when executed by a processor, cause an AS/RS to perform the method of the sixth aspect.

Each possible combination of any of the above-described features forms part of the present disclosure. A plurality of instances of any feature may also be present. By way of example, implementations of the disclosure will now be described with reference to the drawings. Each possible combination of any features described below with any features described above also forms part of the disclosure.

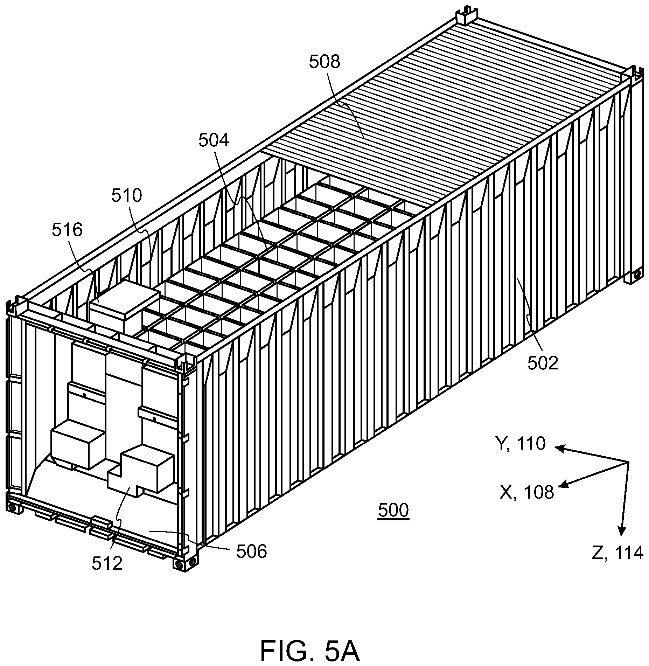

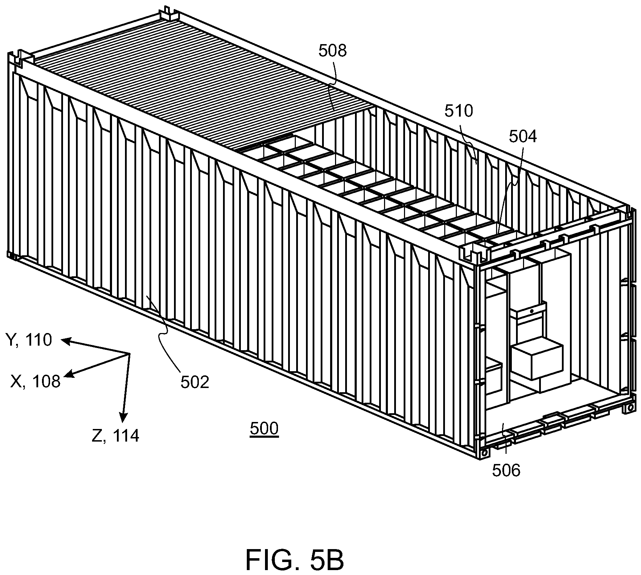

In the first aspect of the present disclosure, with reference to Figs. 5 A and 5B, an exemplary mobile storage system 500 comprises a mobile container 502 and an automated storage and retrieval system "AS/RS" 504 arranged inside the mobile container 502. The mobile container 502 shown in Figs. 5A and 5B is a standard shipping container known to the skilled person. It comprises a base panel 506, a top panel 508, and four vertically extending side panels 510 extending from each side of the base panel 506 to connect the base panel 506 and the top panel 508. The top panel 508 is displaceable and is configured to slide between a first position in which the top of the mobile container 502 is closed (not shown) and a second position in which the top of the mobile container 502 is open. The transition between the first and second positions is achieved manually in the present example, although it can be automated with conventional means known to the skilled person such as a motor. The AS/RS 504 is accessible from outside the mobile container 502 (i.e. from above the mobile container in the present example) when the displaceable panel is in the second position. The AS/RS 504 is not be accessible from above the mobile container 502 when the displaceable panel is in the first position since the top of the mobile container 502 is closed.

In other examples, other panels of the mobile container 502 may be displaceable to provide lateral access to the AS/RS 504.

The mobile storage system provides a short-term storage solution for events and pop-ups. It is agile and adaptable. When paired with a second immobile storage system to enable transfer of storage bins between the systems, as discussed in detail below, it allows rapid planning of pop-ups or pickup-points, as well as rapid packing, preparation and access to the storage system. By virtue of having a slidable panel, the mobile system 500 can be positioned adjacent to an immobile storage system and the slidable panel can be opened *in situ,* simplifying the processes of docking the mobile system 500 with the immobile system.

The AS/RS 504 is similar to the AS/RS disclosed above as shown in Figs. 1 and 2, but adapted to fit in the mobile container 502. It has a storage grid defined by vertical columns defining a plurality of cells. It comprises a robotic vehicle 516, such as shown in Fig. 3A, Fig. 3B or Fig. 3C, arranged to traverse the storage grid and move a storage bin in and out of the storage grid. A plurality of storage bins are stored within the grid. A rail system or network is formed on top of the grid and comprises pairs of vehicle rails or tracks, respectively extending in the X and Y directions 108, 110. The robotic vehicle 516, which can be of a range of size, shape and function, is provided and configured to run on the rails and to transport bins in both the X and Y directions 108, 110. The robot 516 is additionally configured to lift and lower bins from/into the columns in the Z direction 114, the bins being guided by vertical frame members. The robot 516 accesses the bins via access openings above the columns and formed between the rails.

The grid includes pick-up ports 512 through which storage bins and items can be manually removed from the grid. A control system, as shown in Fig. 4, controls the robots and pick-up ports 512.

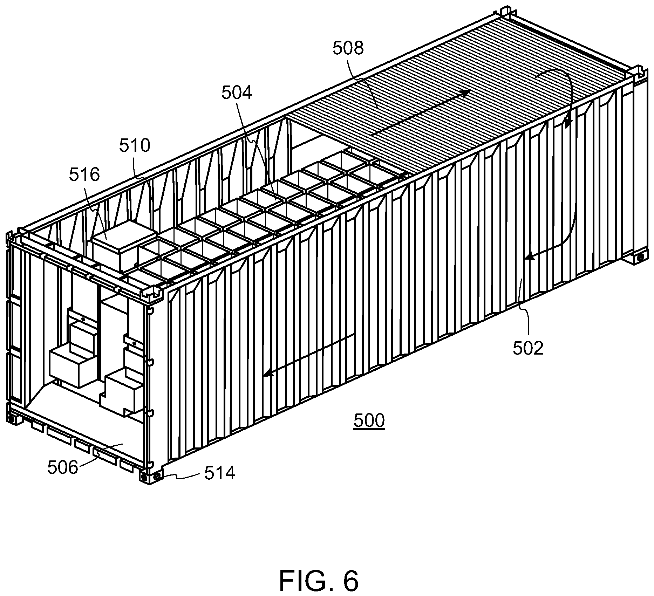

The mobile container 502 comprises guide tracks along edges securing the top panel 508 for guiding sliding of the top panel 508. The displaceable top panel 508 is a shutter curtain comprising a plurality of interlocking shutter slats. The plurality of interlocking shutter slats comprise an end slat, wherein the end slat comprises a locking mechanism for preventing sliding of the shutter curtain when in a locked configuration (not shown). Fig. 6 shows the same mobile system 500 as shown in Figs 5A and 5B. The arrows in Fig. 6 show the movement path of the top panel 508 as it slides. As shown in Fig. 6, a plane of the shutter curtain is parallel to a plane of the base panel 506 in the second position. That is to say that the top panel 508 wraps around the side and bottom of the mobile container 502. Accordingly, the mobile container 502 comprise support means 514 on the base panel 506 configured to position the mobile container 502 above the floor creating a space to accommodate the shutter curtain, such that the plane of the shutter curtain is underneath and parallel to a plane of the base panel in the second position.

In other examples, instead of the shutter curtain wrapping around the mobile container 502, the mobile container 502 comprises a roller tube on a side panel 510, wherein the shutter curtain is configured to wrap around the roller tube when the shutter curtain is in the second position.

In other examples, the displaceable panel rotates on a hinge to provide access to the AS/RS 504, or is screwed down and can be unscrewed and lifted off, or is otherwise removeable.

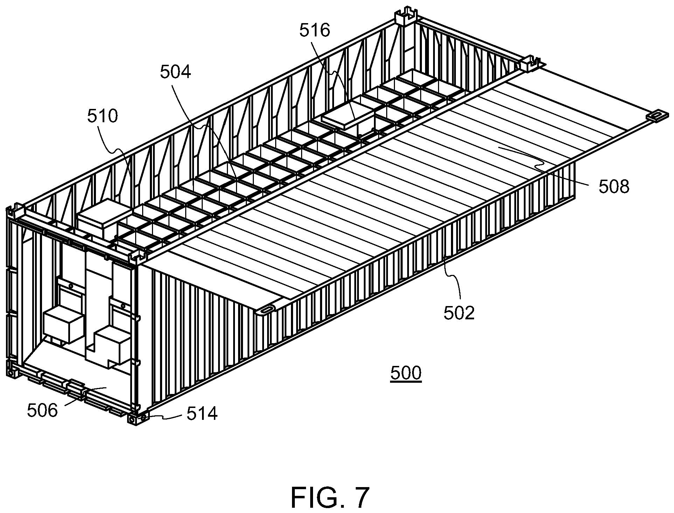

As shown in Fig. 7, in another example, the top panel 508 may slide or rotate to the longitudinal side of the mobile container 502 forming an overhang in the second position. The overhang may be used to provide shelter or as part of a display for a pop-up.

In other examples, the displaceable panel is one of the side panels 510. In this instance, the grid comprises a transfer port configured to allow storage bins to be removed (horizontally) from an associated port column. As such, a transfer port comprises a conveyor onto which a storage bin may be lowered and transported horizontally out of the grid. This enables the lateral transfer of a storage bin to and from another storage system that the mobile container 502 has docked with.

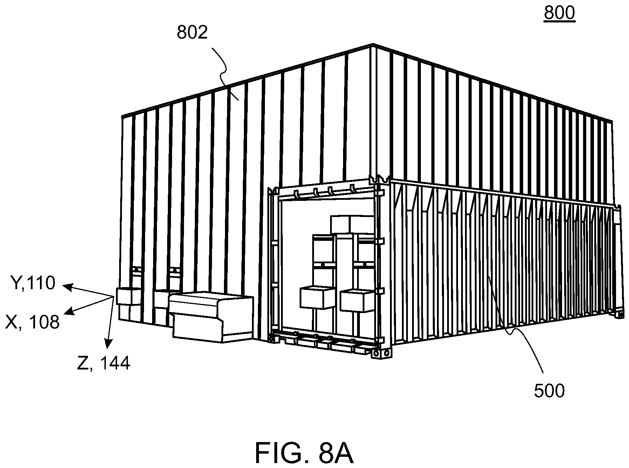

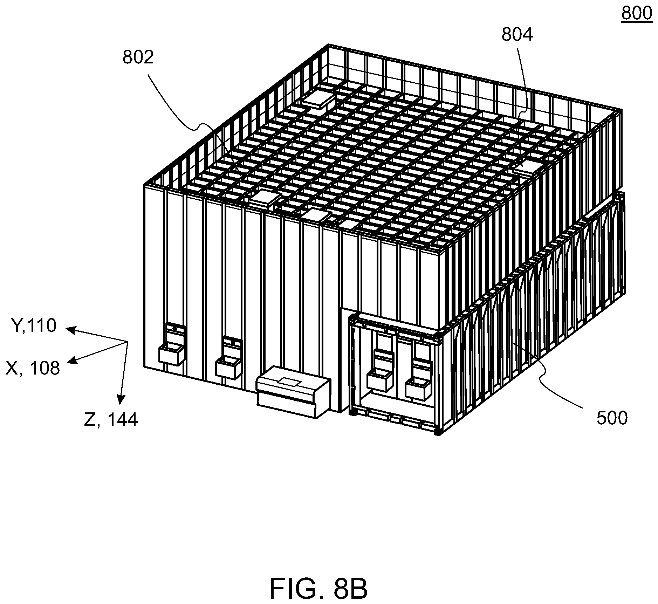

In the second aspect of the present disclosure, with reference to Figs. 8A and 8B, an exemplary AS/RS 800 comprises a first automated storage and retrieval sub-system 802 in communication with a second automated storage and retrieval sub-system 500. The first automated storage and retrieval sub-system comprises a storage grid defined by one or more vertical columns defining a plurality of cells, such as the one disclosed above and shown in Figs. 1 and 2. The second automated storage and retrieval sub-system is the exemplary mobile storage system 500 of the first aspect disclosed above.

The automated storage and retrieval system comprises a first robotic vehicle 804, such as disclosed above and shown in Fig. 3A, Fig. 3B or Fig. 3C, arranged to traverse the first automated storage and retrieval sub-system 802 and move a storage bin in and out of the storage grid of the first automated storage and retrieval sub-system 802. The automated storage and retrieval system further comprises a second robotic vehicle 516, such as disclosed above and shown in Fig. 3A, Fig. 3B or Fig. 3C, arranged to traverse the second automated storage and retrieval sub-system 500 and move a storage bin in and out of the storage grid of the second automated storage and retrieval sub-system 500. The automated storage and retrieval system comprises a plurality of storage bins that can be transferred between and stored in the first and second sub-systems. The first robot 804 is configured to transfer a storage bin between the first and second sub-systems 500, 802.

In the example of Figs. 8A and 8B, the first automated storage and retrieval sub-system 802 is arranged above the second automated storage and retrieval sub-system 500. The first robot 804 comprises a lifting device comprising a gripping device, wherein the robot is configured to pass the gripping device through the grid of the first automated storage and retrieval sub-system 802 when transferring the storage bin between the first automated storage and retrieval sub-system 802 and the second automated storage and retrieval sub-system 500 when the displaceable panel is in the second position. Thus, in this configuration, vertical transfer of storage bins between the sub-systems 500, 802 is possible. In order to permit transfer between the two sub-systems, a one or more grid columns of the first sub-system 802 are open at the bottom to provide access to the grid of the second sub-system 500. That is, they provide a path for bins and for the robot gripping devices. The second robot 516 of the second sub-system 500 may place storage bins in position to be picked up by the first robot 804, or the first robot may 804 may reach into the grid of the second sub-system 500 to retrieve a storage bin.

In another example different to Figs. 8A and 8B, the first and/or second robot is able to traverse both the first and second sub-systems. This is because top levels of the respective grids of the two subsystems are at the same height and directly adjacent to each other. The rail system of each grid is adapted to mate with the other rail system. Thus, the robots can readily cross from one system to another and, for example, replace empty containers in the mobile sub-system with full containers from the immobile sub-system to restock the mobile sub-system. Once restocked, the mobile system can be removed and taken to a different location where its item can be dispensed.

In yet another example different to Figs. 8A and 8B, the first sub-system comprises a first transfer port in a side of its grid configured to transfer storage bins between the sub-systems. The second sub-system 500 also comprises a second transfer port in the side of its grid configured to transfer storage bins between the sub-systems. The first and second transfer ports are aligned with each other, although this need not be the case. For example, a transfer port could be dedicated to transferring out a storage bin and feed a bin into the cell of the other grid where it can be picked up by a robot.

In each of the above examples, each sub-system comprises a control system, such as the processing system 400 disclosed above and shown in Fig. 4, for controlling the various components of the respective sub-system. The two control systems are configured to communicate with each other to coordinate operation of the two sub-systems.

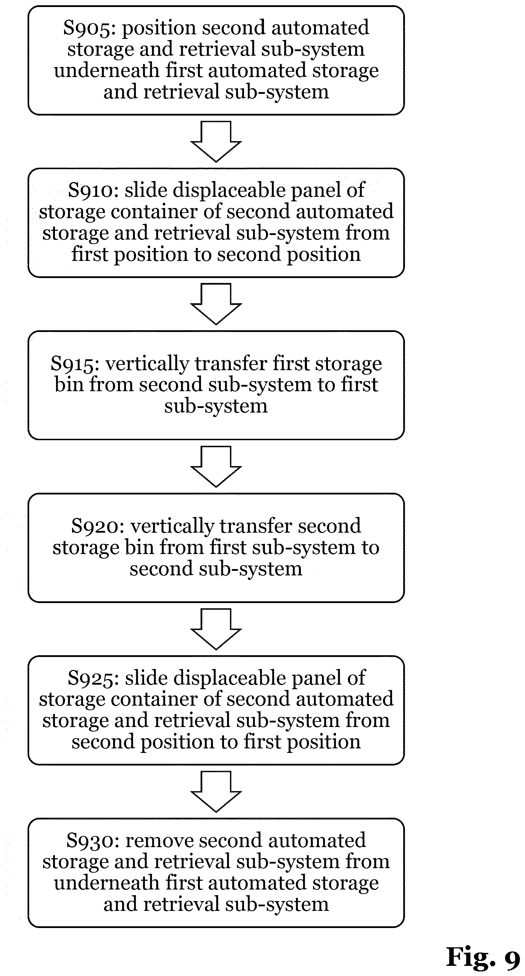

In the third aspect of the present disclosure, with reference to Fig. 9, an exemplary method of using the exemplary AS/RS of the second aspect of the present disclosure shown in Figs. 8A and 8B comprises positioning S905 the second automated storage and retrieval sub-system underneath the first automated storage and retrieval sub-system 802 and sliding S910 the displaceable panel of the mobile container 502 of the second automated storage and retrieval sub-system 500 from the first position to the second position. The method further comprises vertically transferring S915 a first storage bin from the second sub-system 500 to the first sub-system 802 and vertically transferring S920 a second storage bin from the first sub-system 802 to the second sub-system 500, wherein the second storage bin comprises more items than the first storage bin. The method further comprises sliding S925 the displaceable panel of the mobile container 502 from the second position to the first position to close the mobile container 502. The method further comprises removing S930 the second automated storage and retrieval sub-system from underneath the first automated storage and retrieval sub-system 802. This is a restocking operation.

In the fourth aspect of the present disclosure, an exemplary computer readable medium comprises instructions which when executed by a processor cause an AS/RS to perform part of the method of Fig. 9. Specifically, the instructions cause an AS/RS to control the AS/RS to vertically transfer a first storage bin from the second sub-system 500 to the first sub-system 802 and vertically transfer a second storage bin from the first sub-system 802 to the second sub-system 500, wherein the second storage bin comprises more items than the first storage bin.

The fifth aspect of the present disclosure, like the second aspect, is exemplified by Figs. 8A and 8B, although different examples exist within the scope of the fifth aspect. In particular, as explained above, in the second aspect, the displaceable panel of the mobile container is configured to slide or rotate, however, there is no such limitation in the fifth aspect. For example, the displaceable panel may be removed from the container when moved from the first configuration to the second configuration.

The sixth aspect of the present disclosure, like the third aspect, is exemplified by Fig. 9, although different examples exist within the scope of the sixth aspect to the extent that it relates to a method of using the system of the fifth aspect.

In the seventh aspect of the present disclosure, a computer readable medium comprises instructions which when executed by a processor cause an AS/RS of the fifth aspect to perform any of the method of Fig. 9, for example to vertically transfer a first storage bin from the second sub-system 500 to the first sub-system 802 and vertically transfer a second storage bin from the first sub-system 802 to the second sub-system 500, wherein the second storage bin comprises more items than the first storage bin.

Also disclosed are the following numbered clauses:
1. An automated storage and retrieval system "AS/RS" comprising:
   a first automated storage and retrieval sub-system in communication with a second automated storage and retrieval sub-system,
   wherein the first automated storage and retrieval sub-system comprises a storage grid defined by one or more vertical columns defining a plurality of cells,
   wherein the second automated storage and retrieval sub-system is arranged inside a mobile container,
   wherein the container comprises a plurality of panels comprising a displaceable panel configured to move between a first position and a second position, and
   wherein the AS/RS comprises a robot configured to transfer a storage bin between the first automated storage and retrieval sub-system and the second automated storage and retrieval sub-system when the displaceable panel is in the second position.
2. The system according to clause 1, wherein the plurality of panels comprises:
   a base panel;
   a top panel; and
   four vertically extending side panels extending from each side of the base panel to connect the base panel and the top panel,
   wherein one of the base panel, top panel and four vertically extending side panels is the displaceable panel.
3. The system according to any preceding clause, wherein the mobile container further comprises guide tracks for guiding sliding of the displaceable panel.
4. The system according to clause 2 or 3, wherein the displaceable panel is one of the four vertically extending side panels.
5. The system according to any of clauses 2 to 4, wherein the displaceable panel is the top panel, and optionally wherein the top panel forms an overhang in the second position.
6. The system according to any preceding clause, wherein the displaceable panel is a shutter curtain comprising a plurality of interlocking shutter slats.
7. The system according to clause 6, wherein a plane of the shutter curtain is parallel to a plane of another panel of the plurality of panels in the second position.
8. The system according to clause 7 when dependent on claim 2, wherein the mobile container comprises support means on the base panel configured to position the mobile container above the floor, and wherein the plane of the shutter curtain is underneath and parallel to a plane of the base panel in the second position.
9. The system according to clause 5 or 6, wherein the mobile container further comprises a roller tube and the shutter curtain is configured to wrap around the roller tube when the shutter curtain is in the second position.
10. The system according to any preceding clause, wherein the mobile storage system further comprises a pulley, belt drive and/or motor for sliding or rotating the displaceable panel between the first and second positions.
11. The system according to any preceding clause, wherein the first automated storage and retrieval sub-system comprises a transfer port on a side of the grid, wherein the transfer port is configured to transfer a storage bin between the first automated storage and retrieval sub-system and the second automated storage and retrieval sub-system.
12. The system according to clause 11, wherein the transfer port comprises a conveyor belt.
13. The system according to any preceding clause, wherein the second automated storage and retrieval sub-system comprises a transfer port on a side of a grid defined by one or more vertical columns defining a plurality of cells, wherein the transfer port is configured to transfer a storage bin between the second automated storage and retrieval sub-system and the first automated storage and retrieval sub-system.
14. The system according to clause 13, wherein the transfer port comprises a conveyor belt.
15. The system according to any preceding clause, wherein the robot is configured to move across a top level of the grid of the first automated storage and retrieval sub-system.
16. The system according to any preceding clause, wherein the first automated storage and retrieval sub-system is immobile.
17. The system according to any preceding clause, wherein the first automated storage and retrieval sub-system is arranged above the second automated storage and retrieval sub-system.
18. The system according to clause 17, wherein the robot comprises a lifting device comprising a gripping device, wherein the robot is configured to pass the gripping device through the grid of the first automated storage and retrieval sub-system when transferring the storage bin between the first automated storage and retrieval sub-system and the second automated storage and retrieval sub-system when the displaceable panel is in the second position.
19. A method of using the system according to any preceding clause comprising:
   transferring a storage bin between the first and second automated storage and retrieval sub-systems.
20. A computer readable medium comprising instructions which when executed by a processor cause an AS/RS to perform the method of clause 19.

Each possible combination of any of the above-described features forms part of the present disclosure. A plurality of instances of any feature may also be present. By way of example, implementations of the disclosure will now be described with reference to the drawings. Each possible combination of any features described below with any features described above also forms part of the disclosure.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A mobile storage system comprising:
a mobile container; and
an automated storage and retrieval system "AS/RS" arranged inside the mobile container;
wherein the mobile container comprises a plurality of panels, wherein the plurality of panels comprises a displaceable panel configured to slide between a first position and a second position,
wherein the AS/RS is accessible from outside the mobile container when the displaceable panel is in the second position.

2. The system according to claim 1, wherein the plurality of panels comprises:
a base panel;
a top panel; and
four vertically extending side panels extending from each side of the base panel to connect the base panel and the top panel,
wherein one of the base panel, top panel and four vertically extending side panels is the displaceable panel.

3. The system according to any preceding claim, wherein the mobile container further comprises guide tracks for guiding sliding of the displaceable panel.

4. The system according to claim 2 or 3, wherein the displaceable panel is one of the four vertically extending side panels.

5. The system according to any of claims 2 to 4, wherein the displaceable panel is the top panel, and optionally wherein the top panel forms an overhang in the second position.

6. The system according to any preceding claim, wherein the displaceable panel is a shutter curtain comprising a plurality of interlocking shutter slats.

7. The system according to claim 6, wherein a plane of the shutter curtain is parallel to a plane of another panel of the plurality of panels in the second position.

8. The system according to claim 7 when dependent on claim 2, wherein the mobile container comprises support means on the base panel configured to position the mobile container above the floor, and wherein the plane of the shutter curtain is underneath and parallel to a plane of the base panel in the second position.

9. The system according to claim 5 or 6, wherein the mobile container further comprises a roller tube and the shutter curtain is configured to wrap around the roller tube when the shutter curtain is in the second position.

10. The system according to any preceding claim, wherein the mobile storage system further comprises a pulley, belt drive and/or motor for sliding the displaceable panel between the first and second positions.

11. The system according to any preceding claim wherein the AS/RS comprises a grid with a transfer port on a side of the grid, wherein the transfer port is configured to transfer a storage bin between the AS/RS and another adjacent AS/RS.

12. The system according to claim 11, wherein the transfer port comprises a conveyor belt.

13. An automated storage and retrieval system "AS/RS" comprising:
a first automated storage and retrieval sub-system in communication with a second automated storage and retrieval sub-system,
wherein the first automated storage and retrieval sub-system comprises a storage grid defined by one or more vertical columns defining a plurality of cells,
wherein the second automated storage and retrieval sub-system is the mobile storage system according to any preceding claim.

14. A method of using the AS/RS according claim 13 comprising:
transferring a storage bin between the first and second automated storage and retrieval sub-systems.

15. A computer readable medium comprising instructions which when executed by a processor cause an AS/RS to perform the method of claim 14.
